# EUROPEAN PATENT SPECIFICATION

(11) **EP 4 573 286 B1**
(45) Date of publication and mention of the grant of the patent: **19.11.2025**
(21) Application number: 24757998.0
(22) Date of filing: 05.08.2024
(51) Int. Cl.: F03D 80/50

(54) **A ROBOTIC DEPLOYMENT SYSTEM**
ROBOTISCHES EINSATZSYSTEM
SYSTÈME DE DÉPLOIEMENT ROBOTIQUE

(30) Priority: 08.08.2023 GB 202312100
(43) Date of publication of application: 25.06.2025
(73) Proprietor: FRONT TECHNOLOGIES LTD, Loughton, Essex IG10 2EU (GB)
(72) Inventor: GAO, Jianxin, Loughton, Essex IG10 2EU (GB)
(74) Representative: Chung, Hoi Kan
(86) International application number: PCT/GB2024/052070
(87) International publication number: WO 2025/032325

(56) References cited:
- JP-A- 2018 134 242
- US-A1- 2018 297 699
- US-A1- 2021 380 236
- YURI S SARKISOV ET AL: "Development of SAM: cable-Suspended Aerial Manipulator", ARXIV.ORG, CORNELL UNIVERSITY LIBRARY, 201 OLIN LIBRARY CORNELL UNIVERSITY ITHACA, NY 14853, 6 March 2019 (2019-03-06), XP081130125

## Description

### Field

The present application relates to a robotic deployment system, and in particular to a robotic deployment system for servicing a wind turbine.

### Background

Wind turbines typically have service lives of around 20-25 years, during which operation and maintenance (O&M) is crucial in maximising the economic and environmental benefits of wind assets. Current O&M is performed by trained personnel via rope access, in which they dangle in the sky from nacelles whilst traversing along the length of the wind turbine blades (WTB)s. Not only such practices are dangerous, but they are also inefficient and ineffective, especially for offshore wind farms. Thus, robotic systems are preferred to avoid the need for manual working at height alongside the WTBs.

Such an area has attracted increasing interest within both the industry and the scientific community, as a considerable number of research projects have been reported or are ongoing. One of the critical problems is that the deployment of the robotic system onto the WTBs should be efficient, reliable and fail-safe. As the robots are expected to work in the sky, the initiation of the robotic systems onto the WTB surface is a critical step.

For example, WO2021019274A1 discloses a four-anchor point solution to lift the maintenance equipment from the ground to the desired position on a WTB. Specifically, the whole system is lifted from the ground by a cable that is descended from the nacelle. When the system is hoisted to the designed height of the WTB, additional cables underneath the system are used to adjust the position, distance to the WTB and orientation until the vacuum suction cups on the system are attached to the inclined surfaces of the WTB. However, such a 4-anchor point mechanism is complex to deploy and is particularly difficult to implement for offshore wind turbines.

Alternatively, WO2021121524A1 and US20210095642A1 disclose robotic apparatuses having respectively plural moveable clamps and multiple feet with suction cups that enable the robotic apparatuses to descend or crawl, from the root of the WTB near the nacelle to the desired location at the WTB. However, such mechanisms require the robotic apparatuses to traverse along the length of the WTB and therefore they cannot be promptly descended/ascended to the desired location. This is inefficient and can cause extra wind turbine downtime. Furthermore, such robotic apparatuses may not guarantee fail-safe when the moveable clamps or vacuum suction cups encounter a fault that causes detachment from the WTB, e.g. in the event of a momentary power outage or abnormal surface condition at the WTB. When this occurs, re-establishing attachment can be difficult and timely, as both examples require lifting the robotic apparatuses back to the root of the WTB to re-initiate the attachment process. Critically, due to their small sizes and limited capacities to attach to the WTB, robotic apparatus-based maintenance systems are typically not capable of carrying large or heavy equipment onboard when servicing the WTB. Further background art is disclosed in US 2021/380236 A1. Therefore, a robotic deployment system that is efficient, reliable, fail-safe and able to transport large and heavy equipment to the proximity of the repair site, is highly desirable.

### Summary

The present invention offers a robotic deployment system comprising a mobile deployment unit and a support unit where both units may be suspended by respective first and second cables and be hoisted to an elevation proximal to a desired work site. The mobile deployment unit may resemble a drone that is manoeuvrable towards, and attachable onto, the WTB to carry out servicing and/or repair thereon. Since the mobile deployment unit may be at least partially suspended in the air by the cable, it may also significantly reduce the power consumption for sustaining the mobile deployment unit in the air in comparison to known drones, thereby facilitating an efficient and reliable deployment of servicing equipment. Furthermore, the cable attachment forms an outstanding fail-safe mechanism in that in the event of unintentional detachment, the mobile deployment unit may promptly reattach to the wind turbine blade.

Furthermore, the mobile deployment unit may be connected to the support unit by an auxiliary cable through which the support unit may supply power, pneumatics, as well as optical and data communication between the mobile deployment unit and auxiliary equipment provided in the support unit. Such an arrangement may minimise the size and weight of the mobile deployment unit, thus increasing its manoeuvrability, as well as reducing power consumption and the likelihood of detaching from the WTB once the two are engaged.

According to a first aspect of the presently-claimed invention, there is provided a robotic deployment system for servicing a wind turbine, comprising:
a mobile deployment unit having one or more propulsion units mounted thereon arranged to generate thrust having at least a horizontal force component for driving movement in the mobile deployment unit towards a wind turbine blade of the wind turbine; and
a support unit connected to the mobile deployment unit by an auxiliary cable; the support unit comprises auxiliary equipment for supporting the operation of the mobile deployment unit through the auxiliary cable;
wherein the support unit is suspendable in the air by a first cable connected to a nacelle of the wind turbine, and wherein during operation the mobile deployment unit is at least partially suspendable in the air by a second cable; and wherein the second cable is connected between the mobile deployment unit and a second cable anchoring point above the support unit.

The support unit and the mobile deployment unit may be connected to i) the nacelle by respective first and second cables; or ii) a connecting arm respectively by a third cable and the second cable, wherein the connecting arm is suspendable by the first cable connecting between the connecting arm and the nacelle.

The robotic deployment system may primarily be used for transporting and securing servicing equipment to a wind turbine blade, so as to allow the servicing equipment to carry out servicing (e.g. inspection, repair and/or maintenance) in close proximity to, or in contact with, the surface of the wind turbine blade. Specifically, during the said servicing the wind turbine is locked from rotation, with the surface of the wind turbine blade angled to the vertical axis. The servicing/inspection equipment may base on one or more of ultrasonic, radiography, shearography, acoustic emission, thermography and tap test equipment for inspecting the wind turbine blade, and also repair and/or maintenance tools such as a robotic arm for repairing and/or maintaining the wind turbine blades.

The robotic deployment system comprises two main components: a support unit and a mobile deployment unit connected together by an auxiliary cable. Both the support unit and the mobile deployment unit are suspended by respective first and second cables, e.g. directly or indirectly through a connecting arm. During use, the support unit may remain substantially stationary whilst the mobile deployment unit may move towards the WTB before attaching thereto to perform the servicing of the WTB.

The support unit may be arranged to provide one or more of power, pneumatic and vacuum supply, as well as other functionalities, for example optical and data communication, to support the operation of the mobile deployment unit through the auxiliary cable. More specifically, a large portion of the equipment, such as batteries, air compressors, vacuum pumps, diagnostic and data processing equipment that are required for sustaining the operation of the mobile deployment unit may be carried by the support unit. As such, by off-loading the weight of the equipment to the support unit, such an arrangement may significantly reduce the load carried by the mobile deployment unit, thereby increasing its manoeuvrability and reducing its power consumption.

The support unit may comprise a cable connector for connecting to the first cable or a third cable, wherein the first cable may attach directly to the nacelle through an anchor or a first cable winch provided thereon. More specifically, the cable connector may be directly or indirectly connectable with a first end of the first cable or the third cable, wherein a second end of the first cable may engage with the anchor or the first cable winch at the nacelle or other parts of the wind turbine that are situated above the support unit. In some embodiments, the first cable may be looped, or hooked, onto the hub of the wind turbine. The cable connector may be an eye anchor, a quick-release connector or any suitable connector suitable for supporting the weight of the robotic deployment system.

During operation, the support unit may be hoisted to an elevation proximal to a desired work site by reeling in the first cable. In preferred embodiments, the first cable may be reeled or unreeled by the first cable winch at the nacelle to control the elevation of the support unit. Preferably, the first cable winder may be remotely controlled, e.g. through radio wave communication, by service personnel distanced from the nacelle, or through a control panel electrically connected to the first cable winder. In some embodiments, the first cable winch may be retrofitted to a nacelle as part of the assembling process, and wherein the first cable winch may remain on the nacelle after the servicing is completed for carrying out future services.

In some embodiments, the first cable may directly connect to the support unit, e.g. to the cable connector at the support unit. In preferred embodiments, the first cable may connect to the cable connector of the support unit sequentially through a connecting arm and a third cable, wherein the connecting arm may also connect to the second cable that suspends the mobile deployment unit. That is, in these embodiments, the connecting arm may comprise the second cable anchor point which is situated above both the support unit and the mobile deployment unit. The phrase "above" herein refers to the second cable anchoring point situated at an elevation that is higher than the support unit and the mobile deployment unit. The third cable may connect between the connecting arm and the support unit, and may be considered as an extension of the first cable. Thus, in these embodiments, the elevation of the support unit and the mobile deployment unit may be simultaneously controlled by reeling in/out the first cable at the first cable winch.

The mobile deployment unit may resemble a drone. For example, it may comprise one or more propulsion units for manoeuvring the mobile deployment unit. However, in contrast to a commercially available drone, the weight of the mobile deployment unit may be at least partially supported by the second cable when it is suspended in the air, e.g., prior to attaching to the surface of the wind turbine blade.

In preferred embodiments, the robotic deployment system may include one or more of the first, second and third cables. In some embodiments, particularly in situations where the mobile deployment unit and/or the support unit engage with first and/or second cables that are fed from existing cable winches, the robotic deployment system may be supplied without one or both of the first and second cables.

The first, second and third cables may be any flexible cable having a tensile strength suitable for at least supporting the full weight of the support unit and/or the mobile deployment unit. The first, second and third cables may form from metal wires, natural fibres or synthetic fibres.

The mobile deployment unit may be at least partially suspendable in the air by the second cable. For example, the full weight of the mobile deployment unit including the servicing equipment carried onboard may be supported by the second cable. More specifically, the mobile deployment unit may comprise a cable connector directly connectable with a first end of the second cable, wherein a second end of the second cable may be i) directly connected to the second cable anchor or a second cable winch, i.e. both may referred to as the second cable anchor point, at the nacelle or other parts of the wind turbine that are situated above the mobile deployment unit and the support unit; and preferably ii) directly connected to the connecting arm and thus connected to the first cable by the connecting arm. **In** both cases, the second cable may be suspended by the second cable anchoring point (e.g. the nacelle or the supporting arm) above the support unit, and therefore the mobile deployment unit is supported independently to the support unit. More specifically, since both the support unit and the mobile deployment unit are suspended by the connecting arm, the second cable anchoring point to which the second cable is connected would inevitably be situated above the support unit. Such an arrangement may result in a lengthier second cable which, as the mobile deployment unit moves about the second cable anchoring point, the lengthier second cable would result in a small angular displacement relative to the said second cable anchoring point. Advantageously, such an arrangement not only reduces the amount of vertical movement for a given amount of horizontal displacement in the mobile deployment unit thus making it easier to control, but it also minimises the reduction in vertical force component provided by the second cable as the mobile deployment unit moves towards the wind turbine blade.

In embodiments where the second cable is directly connected to the nacelle, the second cable may engage a second cable winch which operates in a similar manner to the first cable winch. That is, the second cable winch may control the elevation of the mobile deployment unit. The first and second cable winches may operate independently or preferably, the first and second cable winches may operate synchronistically. By raising and/or lowering the first and second cables in unison, such an arrangement may advantageously allow the support unit and the mobile deployment unit to remain in the vicinity of each other, thereby minimising the length of the auxiliary cable connecting therebetween.

In the preferred embodiments where the second cable is connected to the first cable by the connecting arm, the third cable and the second cable may be attached towards opposite ends of the connecting arm and spaced from each other, thus preventing the two cables from entanglement. The first cable may attach towards the middle of the connecting arm. The connecting arm may be provided with a counterweight to balance out the weight differential between the mobile deployment unit and the support unit. In use, the elevation of both the support unit and the support unit may be controlled by the first cable winch, thus allowing the two units to elevate or descend simultaneously and synchronistically.

Optionally, the robotic system further comprises a stabiliser cable attached between the support unit and an anchor positioned below the support unit for stabilising the support unit. For example, the anchor may be positioned on the ground, or a platform of an offshore windfarm, underneath the support unit. The anchor may be a conventional ground anchor, or it may be a weight temporarily placed on the ground or in the sea. Such an arrangement may minimise the sway in the support unit in high winds and therefore improves the stability of both the support unit and the mobile deployment unit. In some other embodiments, the anchor may be provided at the tower of the wind turbine, directly or through a horizontally extending arm.

Optionally, the first cable extends substantially parallel to the tower of the wind turbine. Optionally, the third cable extends substantially parallel to the tower of the wind turbine. More specifically, at least a part of the first cable extends substantially parallel to the vertical axis. Such an arrangement may remove horizontal force components acting on the support unit, and thereby it may minimise or eliminate tilting in the support unit.

Since the mobile deployment unit is at least partially suspended in the air, in comparison to known drones, the upward thrust typically required for sustaining the mobile deployment unit in the air may be significantly reduced, or altogether not required. Such an arrangement may not only allow a heavier payload, e.g. more powerful robotic arms or equipment, to be transported, but it may also significantly reduce the power consumption for sustaining mobile deployment unit in the air, as well as making it more manoeuvrable and minimises the likelihood of detachment from the WTB.

Once the mobile deployment unit is securely connected with the cable, it may be lifted directly from the ground or a vessel at sea to a height approximately level with a desired work site at the wind turbine blade, e.g. by reeling the second cable or the first cable towards the nacelle depending on the configuration. The phrase "approximately level with" used herein takes into account a slight elevation of the mobile deployment unit once it is attached to the wind turbine blade. Specifically, since the mobile deployment unit is tethered to, and moves about, the nacelle or the support unit, it may not be lifted direct to the exact height of the work site, but to a level that is slightly below and approximately level with the work site. Alternatively, the mobile deployment unit may be lowered directly to a height approximately level with a desired work site at the wind turbine blade, e.g. by unreeling the second cable or the first cable away from the nacelle or the support unit. The one or more propulsion units may then generate a thrust, with at least a horizontal force component, to drive the mobile deployment unit towards the wind turbine blade. That is, the key function of the one or more propulsion units is to push the mobile deployment unit, at least horizontally, towards the wind turbine blade. The one or more propulsion units may also control the elevation of the mobile deployment unit by controlling the vertical force exerted on the mobile deployment unit.

The one or more propulsion units may comprise propellers and/or turbine engines, or other suitable propulsion units. Preferably, the one or more propulsion units may comprise only propellers similar to those employed in known drones.

Optionally, the mobile deployment unit further comprises one or more of: a sensor arrangement for sensing the position and/or orientation of the mobile deployment unit and based thereon generating a sensor signal, wherein the sensor arrangement comprises one or more of an accelerometer, a gyroscope, a rangefinder, a GPS sensor and a displacement sensor;
a controller for controlling the one or more propulsion units based on the sensor signal, optionally the controller is configured to control the propulsion units by a closed-loop control; and
one or more attachment devices for removably attaching the mobile deployment unit onto a surface of the wind turbine blade, wherein the one or more attachment devices comprises vacuum suction devices and/or electromagnets.

In some embodiments, the one or more propulsion units are configured to generate thrust along multiple horizontal axes for effecting translational movement in the mobile deployment unit in the horizontal direction and/or rotational movement around any axis. That is, the mobile deployment unit may not include any propulsion unit for lifting the mobile deployment unit, and the vertical position of the mobile deployment unit may be solely controlled by the winching and unwinching of the second cable and/or the first cable. For example, the one or more propulsion units may drive moment or torsion enabling the mobile deployment unit to rotate or tilt, and thereby allowing the attachment units to align with an inclined surface of the wind turbine blade. Advantageously, such an arrangement may reduce the number of propulsion units required, and therefore the robotic deployment system can be produced at a lower cost.

Preferably, the one or more propulsion units comprise a set of primary propulsion units each configured to generate thrust along a first horizontal axis, and a set of secondary propulsion units each configured to generate thrust along a second horizontal axis perpendicular to the first horizontal axis. As an example, the set of primary propulsion units may be evenly distributed relative to the centre of the mobile deployment unit in a vertical plane. Thus, applying a varied thrust generated amongst the different primary propulsion units may drive moment or torque in the mobile deployment unit, causing it to rotate or tilt. In an embodiment, there may be four primary propulsion units arranged in the same vertical plane that is horizontally offset from the centre of the mobile deployment unit. In an embodiment, the secondary propulsion units may align with the centre of the mobile deployment unit in a horizontal plane, thus the horizontal thrust generated by the secondary propulsion units may cause the mobile deployment unit to traverse along the second horizontal axis. In some embodiments, the primary propulsion units may not align in the same vertical plane, and/or the secondary propulsion units may not align in the same horizontal plane.

Alternatively, the one or more propulsion units are configured to generate thrust along multiple axes, for effecting translational movement in the mobile deployment unit in any direction and/or rotational movement around any axis. That is, the one or more propulsion units may generate thrust with force components in both the horizontal and vertical axes. As such, the one or more propulsion units may be configured to effect translational movement in the mobile deployment unit in any direction and/or rotational movement around any axis. Specifically, the one or more propulsion units may additionally provide upward/downward thrust to the mobile deployment unit for adjusting its vertical position in order to level with the desired work site.

The one or more propulsion units, or more specifically the thrust generated by the one or more propulsion units, may be controlled by the controller, based on position, distance, and/or orientation data received from the sensor arrangement. More specifically, the sensor arrangement may comprise a gyroscope for sensing the orientation and/or angular velocity of the mobile deployment unit, and/or a Global Positioning System for sensing the position of the mobile deployment unit, and/or a rangefinder (e.g. a laser/ultrasonic distance meter) for sensing a relative position of the mobile deployment unit to the wind turbine blade (e.g. the distance to the surface of the wind turbine blade) and/or a relative position of the mobile deployment unit to the ground (e.g. the elevation of the mobile deployment unit). Additionally, the sensor arrangement may comprise one or more of a Global Positioning System, an accelerometer, and a distance sensor for sensing the speed and/or acceleration of the mobile deployment unit.

The control unit may, based on the real-time signals received from the sensing arrangement, control the propulsion units by a closed-loop control, so as to reactively fine-tune the thrust generated by the one or more propulsion units. Such an arrangement may help to counter the effect of winds, and thereby maintaining the stability of the mobile deployment unit prior to its attachment to the wind turbine blade, as well as improving its reliability and manoeuvrability.

Once the mobile deployment unit is manoeuvred to the proximity of, or in contact with, the wind turbine blade, the controller may activate the one or more attachment devices to attach the mobile deployment unit to the surface of the wind turbine blade. The attachment devices may comprise vacuum suction devices or electromagnets for effecting the releasable attachment. Thus, once the mobile deployment unit is attached to the wind turbine blade, the mobile deployment unit may no longer require support from the second cable, e.g. the weight of the mobile deployment unit may be fully supported on the wind turbine blade by the attachment devices.

The mobile deployment unit may comprise a storage for storing a servicing equipment or module, e.g. an inspection, repair and/or maintenance device, and wherein the storage comprises one or more compartments within the mobile deployment unit, and/or a platform formed on an external surface of the mobile deployment unit. In the latter, the platform may be provided on the same side of the mobile deployment unit as the attachment devices, such that when the mobile deployment unit is attached to the wind turbine blade, the servicing equipment may be in close proximity and/or in contact with the surface of the wind turbine blade.

As a whole, such an arrangement not only facilitates efficient and reliable deployment of servicing equipment, but it also forms an outstanding fail-safe mechanism. Specifically, in the event of unintentional detachment, the tethered mobile deployment unit may remain suspended by the second cable and approximately levels with the desired work site, and can be promptly redeployed with the use of one or more propulsion units.

Optionally, the one or more propulsion units comprise a plurality of propulsion units, wherein the plurality of the propulsion units are identical or different to each other. The plurality of propulsion units may be orientated to generate thrust, in the same direction or in different directions.

Optionally, the one or more propulsion units are rotatably supported on the mobile deployment unit for changing the direction of the generated thrust. For example, some or all of the propulsion units may be mounted on the mobile deployment unit by swivel arms controllable by the controller. This may facilitate a change in the direction of the generated thrust, and thereby allowing the mobile deployment unit to be steered or tilted more easily. In addition, such an arrangement may allow for a reduction in the number of propulsion units required.

Optionally, the second cable is arranged to reduce tension upon attaching the mobile deployment unit to the surface of the wind turbine blade. In some situations, particularly in high winds, the wind turbine blade may experience a degree of oscillation even if the wind turbine is locked from rotating. Thus, by unreeling the second cable once the mobile deployment unit has been attached to the wind turbine blade, it slacks the second cable and thereby reduces the likelihood of unintentionally detaching the mobile deployment unit from the wind turbine blade.

Optionally, the one or more propulsion units are configured to generate an overall thrust with a horizontal force component of at least 10N.

Optionally, the robotic deployment system comprises a plurality of mobile deployment units, wherein the mobile deployment units are connected to the support unit by respective auxiliary cables and are independently operable. That is, the support unit may simultaneously support the operation of the plurality of mobile deployment units each arranged to service a respective work site or the same work site. Advantageously, by sharing the resources offered by the support unit, e.g. the power, pneumatic and vacuum supply, amongst the plurality of the mobile deployment units, such an arrangement may reduce the need to provide replicate auxiliary equipment, as well as an increased efficiency of servicing process.

The plurality of mobile units may each be suspended by a respective second cable. Each second cable may be connected to one of the nacelle, the connecting arm or the support unit. Alternatively, the plurality of mobile units may each be suspended by the same second cable by respective supplementary second cables. For example, when the plurality of mobile deployment units are working in proximity of each other, the plurality of mobile deployment units may connect to the same second cable by respective supplementary second cables, wherein the supplementary second cables may have the same or different lengths according to their desired work site location. Advantageously, such an arrangement may reduce the likelihood of entanglement, as well as the time required for setting up the system.

Preferably, the plurality of mobile deployment units may simultaneously service the same wind turbine blade, or they may service different wind turbine blades of the same wind turbine.

In some embodiments, the plurality of mobile deployment units may cooperate with each other when servicing the same work site, e.g. each mobile deployment unit may deploy a respective robotic arm for carrying out the same or different task at the same work site. Advantageously, such an arrangement may allow more complicated tasks to be completed, or it may improve the efficiency of servicing process.

Optionally, the robotic deployment system further comprises a docking station to which the mobile deployment unit docks when it is inactive. More specifically, the mobile deployment unit may move towards, and therefrom releasably latch onto, the docking station when it is idle, and it may be deployed to carry out servicing tasks once it is released from the docking station. Advantageously such an arrangement may stabilise the mobile deployment unit when it is not in use, thus eliminating the likelihood of collision with the support unit and/or other mobile deployment units. Furthermore, such an arrangement may reduce the strain placed on the second cable and/or auxiliary cable when the mobile deployment unit is idled.

The docking station may be provided on the support unit and/or provided on one or more of the cables connected to the support unit. Preferably, the docking station is provided on the support unit. In embodiments where a plurality of mobile development units are featured, the docking station may accommodate all the mobile development units.

Optionally, the robotic deployment system further comprises an auxiliary winch and/or a recoil spring winder for adjusting at least the length of the auxiliary cable. The auxiliary winch or the recoil spring winder may preferably be provided at the support unit, but it may also be provided on the mobile deployment unit. In embodiments where the second cable is connected between the mobile deployment unit and the support unit and thereby incorporates the auxiliary cable, the auxiliary and/or recoil spring winder winch may also be arranged to adjust the length of the second cable.

Optionally, the mobile deployment unit is configured to collect payload from the support unit for servicing the wind turbine blade, and to return the said payload onto the support unit once the servicing is completed. That is, the support unit may comprise storage space for storing the payload, which may comprise auxiliary equipment, as well as repair materials, that are required to carry out a specific maintenance task. For example, the mobile deployment unit may carry an ultrasonic scanner as a payload for inspecting the work site, which may be swiftly replaced by a welder when the mobile deployment unit is tasked to repair the said work site. Advantageously, such an arrangement may allow different equipment to be switched out promptly at a location proximal to the work site.

Optionally, the support unit is configured to lift personnel carried therein. In some situations, for example when the work site requires physical inspection or during an emergency when the mobile deployment unit malfunctions, the support unit may function as an elevator for carrying the service personnel to the work site. In some embodiments, the support unit may further comprise an onboard control panel so as to allow the personnel to control the support unit and/or mobile deployment unit whilst onboard the support unit. Thus, such an arrangement may offer an alternative or additional means for controlling the mobile deployment unit and/or support unit.

Optionally, the first cable comprises an electrical cable for supplying power to the support unit and/or the mobile deployment unit. For example, the first cable may form from an electrical conductor which supplies power to the supply unit and sustains the weight of the robotic deployment system. Alternatively, the first cable may comprise the electrical cable and a separate suspension cable for suspending the support unit and/or mobile deployment unit. More specifically, the suspension cable and the electrical cable may co-extend and be sheathed in a cable sheath to form a single first cable, or as discrete components of the first cable.

Optionally, the first cable comprises an electrical cable for establishing data communication between the support unit and a remote terminal. Alternatively, data communication between the support unit and the remote terminal may be established by wireless means such as radio waves.

According to a second aspect of the present invention, there is provided a method for deploying the robotic deployment system of the first aspect, comprising the step of:
moving, by the first cable, the support unit to an elevation proximal to a work site at the wind turbine blade, thereby suspending the support unit in the air;
moving, by the second cable, the mobile deployment unit to an elevation proximal to a servicing site at the wind turbine blade, thereby suspending the mobile deployment unit in the air ;and
controlling, the one or more propulsion units of the mobile deployment unit to drive movement in the mobile deployment unit towards the wind turbine blade.

The step of moving may comprise reeling and unreeling of the first cable at the first cable winch provided on the nacelle, thus causing the support unit to elevate or descend in the vertical direction. The support unit may be moved to an elevation proximal to the work site, which may be above, below or substantially level to the work site. Preferably, the support unit may be moved to an elevation below the work site to reduce the likelihood of contact between the auxiliary cable and the propeller blade. The step of moving may comprise reeling and unreeling of the second cable, e.g. by the second cable winch or by the first cable winch when the second cable is connected to the connecting arm, thus causing the mobile deployment unit to elevate or descend in the vertical direction. The mobile deployment unit may be moved to an elevation proximal to the work site, which may be above, below or substantially level to the work site, before it is driven toward the wind turbine blade by the one or more propulsion units. The mobile deployment unit may be moved to an elevation below the work site, and preferably above the support unit.

Optionally, the method further comprises the step of undocking the mobile deployment unit from a docking station before operation; and/or docking the mobile deployment unit onto the docking station once the operation is completed. That is, the mobile deployment unit may be unlatched from the docking station with the second cable fully reeled in, subsequently the second cable may unreel to provide a controlled descent to the work site. Once the operation is completed, the second cable may reel in to gradually elevate the mobile deployment unit towards the docking station to which it latches onto. During the docking and/or undocking step, the one or more propulsion units may drive the mobile deployment unit towards or away from the docking station, as such it may improve the efficiency and safety of the process.

Features from the first aspect or the second aspect of the present invention may be applicable to any other feature from the other aspect.

### Brief Description of the Drawings

Certain embodiments of the presently-claimed invention will now be described, by way of example only, with reference to the accompanying drawings, in which:
Figure 1A illustrates the deployment of a robotic deployment system according to a first embodiment of the present invention;
Figure 1B is an enlarged illustration respectively showing a mobile deployment unit of Figure 1A at an idled position and at an engaged position;
Figures 2A and 2B are perspective views of the mobile deploying unit according to the first embodiment of the present invention;
Figures 2C and 2D are side views of the mobile deploying unit of Figures 2A and 2B;
Figures 3A to 3C are side views illustrating different stages of the attachment process; and
Figure 4 illustrates the deployment of a robotic deployment system according to a second embodiment of the present invention.

### Detailed Description

### First Embodiment

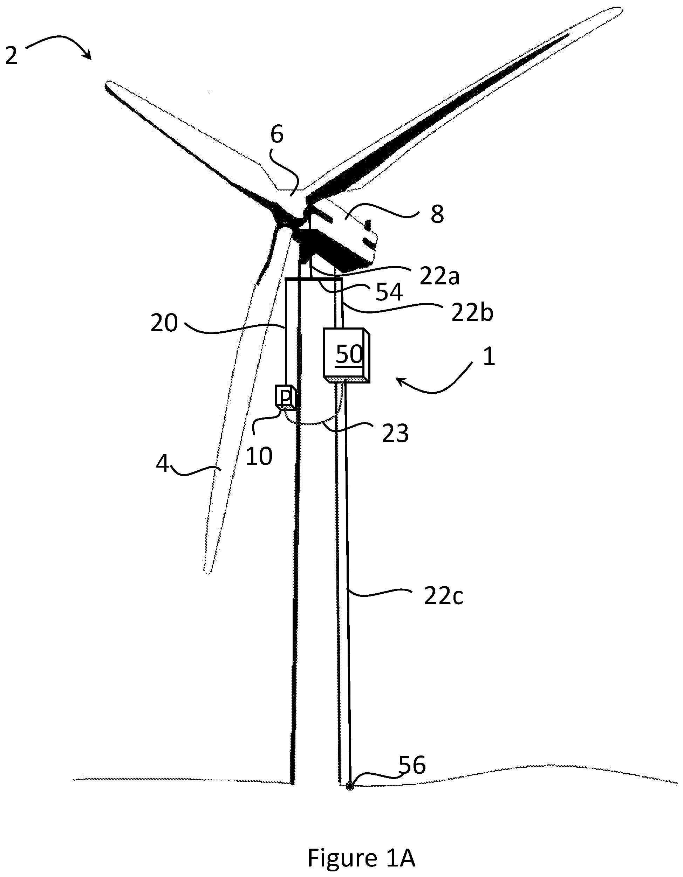

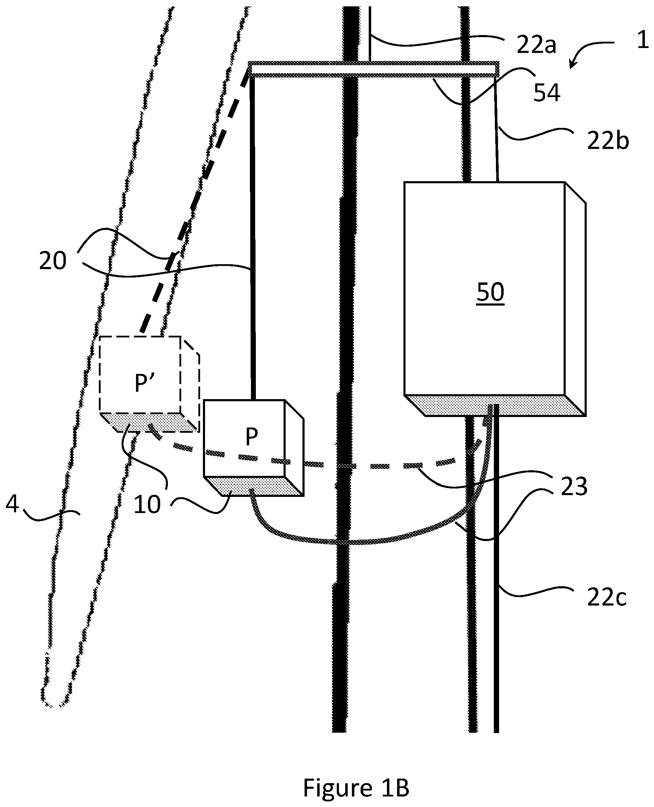

Figure 1A illustrates the deployment of a robotic deployment system 1 according to a first embodiment of the present invention; and Figure 1B is an enlarged illustration respectively showing a mobile deployment unit of Figure 1A at an idled position and at an engaged position.

The robotic deployment system 1 is arranged to transport servicing equipment, such as a robotic arm, by a mobile deployment unit 10 to wind turbine blades 4 of a wind turbine 2. The robotic deployment system 1 further comprises a support unit 50 for supporting the operation of the mobile deployment unit 10 by an auxiliary cable 23 connecting therebetween.

The wind turbine 2 is a typical wind turbine comprising a nacelle 8 towards its upper end. The nacelle 8 contains a generator having a rotor axially connected with a hub 6, onto which a plurality of wind turbine blades 4 are mounted. During normal operation, the wind turbine blades 4 drive rotation in the rotor, thereby converting harvested kinetic energy into electrical energy.

During maintenance, e.g. at a downtime, the rotor is locked from rotating and thereby prohibits any movement in the wind turbine blades 4. Typically, the wind turbine blade 4 of interest generally extends in the vertical direction so as to allow personnel to safely descend from the nacelle 8 to service the wind turbine blades 4. However, due to the design and the curvature of the wind turbine blade 4, its surface typically inclines at an angle between at 3°-5° to the vertical axis. Thus, during servicing the personnel, as well as prior art robotic apparatuses, cannot be directly lowered to the work site. Instead, they must crawl from the root of the wind turbine blade whilst maintaining contact with the wind turbine blade 4.

Aside from the servicing equipment, there are auxiliary equipment such as power controls, air compressors, and vacuum pumps required for supporting the operation of the mobile deployment unit 10. These auxiliary equipment can weigh in excess of 10kg or even 100kg. Ideally, the auxiliary equipment should be provided proximal to the mobile deployment unit 10, particularly when servicing larger wind turbine blades having a blade length of over 100m, so as to reduce the complexity of cable management, as well as the pressure loss in the air hoses. However, fitting these auxiliary equipment directly onto the mobile deployment unit attracts severe weight penalties, which will need to be compensated by more powerful but heavier propellers.

The present invention provides a mobile deployment unit 10 that employs drone technologies for transporting servicing equipment to the desired work site at the wind turbine blade 4 in a reliable and efficient manner, without the need to traverse along the surface of the wind turbine blade as required in known technologies. As shown in Figure 1A, the mobile deployment unit 10 and the support unit 50 are tethered, by respectively a second cable 20 and a third cable 22b to opposite ends of a connecting arm 54 (i.e. the end to which the second cable 20 is connected serves as the second cable anchoring point). The connecting arm 54 is suspended, towards its middle, by a first cable 22a that is connected to the nacelle 8. This way, the mobile deployment unit 10 and the support unit 50 are fully suspended in the air by the respective second cable 20 and the third cable 22b. Thus, such an arrangement eliminates the upward thrust that is otherwise required to sustain the mobile deployment unit 10 in the air. In the illustrated embodiment, the first cable 22a is fed, though a support arm (not shown) extending outwardly from the nacelle 8, by a first cable winch (not shown). In use, the first cable winch lifts and lowers the mobile deployment unit 10 and the support unit 50 to the level of the work site. For example, the first cable winch is arranged to reel in the first cable 22a to simultaneously elevate the two units and unreels to cause their descent. In other embodiments, the first cable may extend through the bottom of the nacelle to tether to an anchor provided inside the nacelle. In other embodiments, the first cable may be looped, or hooked, onto the hub of the wind turbine.

In the illustrated embodiment, the first cable 22a and third cable 22b further comprise electrical cables for energising various components of the robotic deployment system 1, e.g. cable winches, sensors, controllers, propellers and vacuum suction devices in the support unit 50 and the mobile deployment unit 10, as well as establishing communication between a controller and other auxiliary equipment onboard the support unit 50 and a remote terminal.

The robotic deployment system 1 is further provided with a stabiliser cable 22c which is attached between the support unit 50 and a ground anchor 56 that is fixedly or removably attached to the ground. The stabiliser cable 22c, together with the third cable 22b, are connected to opposite sides (upper and lower sides) of the support unit 50, and therefore it limits lateral movement of the support unit 50. In the illustrated embodiment the ground anchor is located directly underneath the support unit 50, which allows the stabiliser cable 22c and the third cable 22b to extend parallelly to the longitudinal axis of the wind turbine. Thus, advantageously, such an arrangement stabilises the support unit 50 which is particularly beneficial at locations that frequently experience high winds.

The support unit 50, as suspended by the third cable 22b and stabilised by the stabiliser cable 22c, is connected to the mobile deployment unit 10 by an auxiliary cable 23. In the illustrated embodiment, the support unit 50 contains a power source, e.g. a power outlet, that is electrically connected to the powerline in the third cable 22b, as well as the electrical components in the mobile deployment unit 10 through the auxiliary cable 23. In other embodiments, the support unit may contain any suitable equipment or hardware that supports the operation of the mobile deployment unit 10.

In the illustrated embodiment, the auxiliary cable 23 comprises a power cord, a vacuum hose, and a data communication cable sheathed in a cable sheath, thus the auxiliary cable 23 comprises a single cable. The auxiliary cable 23 is configured to supply power, vacuum supply to the mobile deployment unit 10, as well as to facilitate data communications with auxiliary equipment onboard the supply unit 50. In some other embodiments, the auxiliary cable may comprise one or more of the power cord, vacuum hose, and data communication cable sheathed together or individually.

Advantageously, such an arrangement dispense with the need to carry heavy equipment, such as batteries, vacuum pump, processor and other auxiliary equipment, as well as repair materials, on board the mobile deployment unit 10, thus increasing its manoeuvrability and energy efficiency, as well as reducing the likelihood of accidental detachment from the wind turbine blade 4.

The support unit 50 is further supplied with an auxiliary cable winch (not shown), which controls the length of the auxiliary cable 23. For example, the auxiliary cable winch unreels or reels in the auxiliary cable 23 as the mobile deployment unit 10 moves away from or towards the support unit 50. Such an arrangement not only eliminates over-tensioning of the auxiliary cable during the use of the mobile deployment unit 10, but it also prevents excessive sway in the mobile deployment unit 10 when it is idled.

During use, the service personnel may first attach a free end of the first cable 22a to the connecting arm 54, before winching the entire robotic deployment system 1 from the ground or a vessel to a level where the mobile deployment unit 10 is approximately level with the work site. At position P, the mobile deployment unit 10 is fully suspended in the air by the second cable 20 and is horizontally spaced from the work site. Due to this gap, it may not be possible to directly form an attachment with the wind turbine blade 4, nor it is feasible to service the wind turbine blade using the servicing equipment.

Once the robotic deployment system 1 is hoisted into position, the service personnel may tether the stabiliser cable 22c to a ground anchor (not shown) located directly underneath the support unit. As such the third cable 22b and the stabiliser cable 22c are substantially parallel to the tower of the wind turbine.

The mobile deployment unit 10 is equipped with a plurality of propellers each arranged to generate thrust in substantially a horizontal direction. Thus, the propellers may drive horizontal movement in the mobile deployment unit 10 towards the wind turbine blade 4 until it reaches position P', wherein throughout its horizontal movement the mobile deployment unit 10 remains suspended by the cable. Specifically, the propellers push the mobile deployment unit 10 to a position where its vacuum suction devices contact, or at least in the vicinity of, the surface of the wind turbine blade 4, thus allowing the mobile deployment unit 10 to releasably attach thereto.

The weight of the mobile deployment unit 10 and its payload can be fully supported by the wind turbine blade 4 once the vacuum suction devices are engaged. In some situations, particularly in high winds, the wind turbine blade 4 may experience a degree of oscillation even if the wind turbine is locked from rotating. Thus, to avoid unintentional detachment, the first cable winch may slightly unreel to slack the cable as soon as the mobile deployment unit 10 has been mated to the wind turbine blade 4. The reduction in cable tension provides some leeway and thereby reduces the likelihood of unintentionally detaching the mobile deployment unit from the wind turbine blade 4.

In the event of unintentional detachment, e.g. due to poor surface conditions or a temporary power outage, the present invention may allow the mobile deployment unit 10 to promptly reattach to the wind turbine blade 4. That is, since the mobile deployment unit 10 is already suspended at the desired level, it merely requires to be driven to the wind turbine blade 4 and reattach thereto. Therefore, the present invention provides an effective fail-safe mechanism and significantly reduces the delay in downtime due to unintentional detachment.

Furthermore, the mobile deployment unit 10 is configured to collect payload (not shown) from the support unit 50 for servicing and/or repairing the wind turbine blade 4, and to return the said payload onto the support unit 50 upon completion of the servicing or repair. For example, the payload may comprise a variety of tools, e.g. welder, grinder, rotary drill, sander and spray gun suitable for different stages of a repair job, as well as inspection equipment, e.g. ultrasonic, radiography, shearography, acoustic emission, thermography and tap test equipment. Specifically, the payload is adaptable for use onboard the mobile deployment unit 10, directly or through the robotic arm. Thus, when carrying out a particular task, the mobile deployment unit 10 is arranged to pick up the payload from the support unit 50 for carrying out the said task, and subsequently to return the payload back to the support unit 50 once the task is accomplished. Advantageously, such an arrangement dispenses with the need to carry all of the tools and equipment onboard the mobile deployment unit 10 and thus it significantly reduces its weight.

The support unit 50 Is further provided with a platform (not shown) for carrying onboard one or more service personnel and is capable of lifting the personnel to an elevation that levels with, or above, or below, the work site. That is, the support unit 50 additionally functions as an elevator so as to allow the personnel to closely inspect the work site, as well as to attend to the mobile deployment unit 10 in case of an emergency. The support unit 50 is further provided with a control panel which allows the personnel to control the mobile deployment unit therefrom, in addition to the remote controlling means.

The support unit 50 is further provided with a docking station (not shown) to which the mobile deployment unit 10 may optionally dock when it is idled. The docking station comprises a releasable latch engageable with a corresponding mechanism at the mobile deployment unit 10. More specifically, when the mobile deployment unit 10 is idled, the auxiliary cable 23 reels in the mobile deployment unit 10 towards the support unit, and when the mobile deployment unit 10 is in the vicinity of the support unit 50, the mobile deployment unit 10 can be driven towards the docking station to engage therewith. On the other hand, when the mobile deployment unit 10 is instructed to perform a task, the latch at the docking station disengages and thereby releases the mobile deployment unit 10 therefrom.

### Mobile Deployment Unit

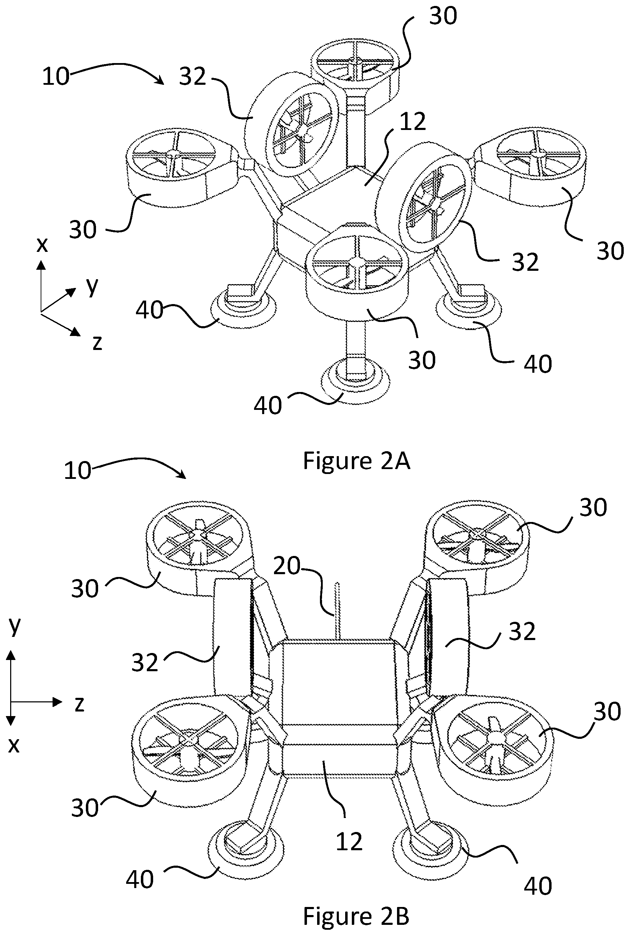

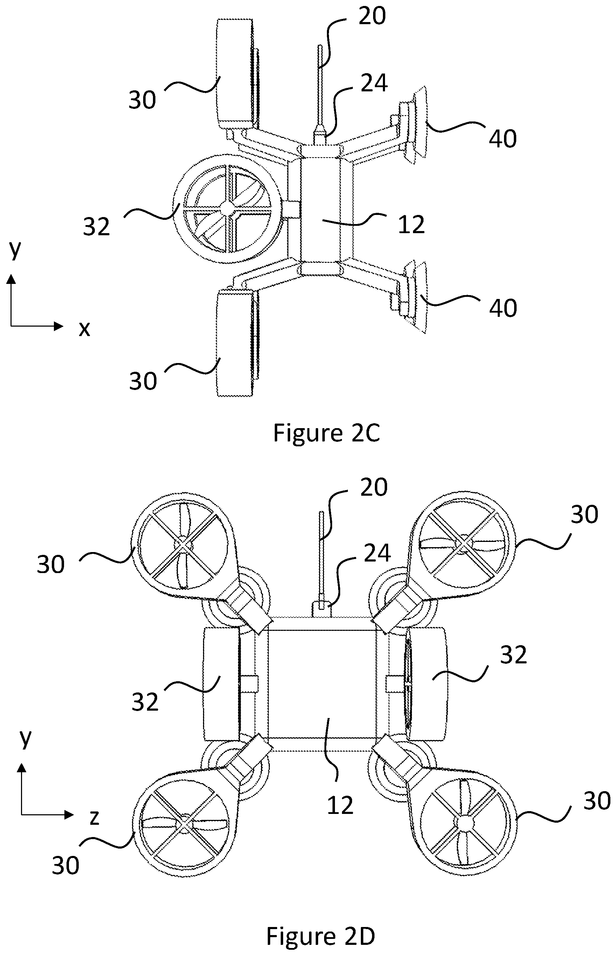

Figures 2A and 2B are perspective views of the mobile deployment unit 10 according to the first embodiment of the present invention as viewed from different angles, and Figures 2C and 2D are side views of the mobile deployment unit 10 of Figures 2A and 2B as viewed from different angles.

As shown in Figures 2A-2D, the mobile deployment unit 10 comprises a main body 12. The main body 12 takes the form of a cuboid and comprises a compartment for storing servicing equipment, such as inspection, repair and/or maintenance devices. The main body 12 also contains a controller in communication with a sensor arrangement for controlling a plurality of propellers 30, 32 mounted onto the main body 12 by outwardly extending support arms.

The sensor arrangement is configured to sense the position, distance and/or orientation of the mobile deployment unit 10. In the illustrated embodiment, the sensor arrangement comprises: a gyroscope for sensing orientation and/or angular velocity of the main body 12; a Global Positioning System for sensing the position of the main body 12; a laser/ultrasonic distance meter for sensing the main body's relative position to the wind turbine blade and/or to the ground or a vessel; and an accelerometer for sensing the speed and/or acceleration of the main body 12. Since all of the electrical components onboard the mobile deployment unit 10 are powered by the support unit 50 through the auxiliary cable 23, and thereby dispensing with the need for an onboard battery.

Based on the received position, distance and/or orientation information, the controller may independently control the thrust generated by each of the propellers to manoeuvre mobile deployment unit 10, as well as to maintain its stability whilst being suspended in the air. More specifically, the control unit controls, based on the real-time signals received from the sensing arrangement, the propulsion units by closed-loop control. This allows the thrust generated by each of the propellers 30, 32 to be reactively controlled. Such an arrangement may help to counter the effect of winds, and thereby maintaining the stability of the mobile deployment unit 10 prior to its attachment to the wind turbine blade 4, as well as improving its reliability and manoeuvrability.

Referring to Figures 2C and 2D, the mobile deployment unit 10 comprises a cable connector 24 at the top of the main body 12. The cable connector 24 is arranged to form a releasable connection with the second cable 20. Thus, during use, the main body 12 is suspended by the second cable 20 in the air through the cable connector 24. The mobile deployment unit 10 further comprises an auxiliary cable connector (not shown) for forming a connection with the auxiliary cable 23.

The mobile deployment unit 10 comprises a set of primary propellers 30 and a set of secondary propellers 32 provided on a side of the main body 12, with a plurality of vacuum suction devices 40 mounted on the opposite side. The vacuum suction devices 40 are driven by the vacuum pump onboard the support unit 50, where the vacuum suction is supplied through a vacuum hose of the auxiliary cable 23. The set of primary propellers 30 comprises four vertically aligned primary propellers 30 each provided at a respective corner of a side of the cuboid main body 12. Specifically, the four primary propellers 30 lie abreast in the same vertical plane offset to a sidewall of the main body 12. The four primary propellers 30 are orientated, and are arranged to generate a thrust, in the same direction. That is, when the mobile deployment unit 10 is suspended by the second cable 20, the four primary propellers 30 are each configured to generate a thrust in the horizontal direction.

Such an arrangement not only drive translational movement in the main body 12, e.g. by generating the same amount of thrust in all of the propellers, but it also enables rotation about any axes to tilt the main body 12, e.g. by generating different amount of thrust in different propellers.

As an example, the overall horizontal force required to push the mobile deployment unit 10 from position P to position P', e.g. at position P' the cable 20 is tilted an angle α of 5° to the vertical axis, is 0.087W, where W is the weight of the mobile deployment unit 10. Thus, for a mobile deployment unit 10 weighing at 100kg, the overall horizontal force required to achieve the required movement, without taking the effect of wind gusts into consideration, is approximately 87N. Clearly, the overall thrust from the propellers should have a higher horizontal force component to counter the effect of wind gusts. According to the present invention, the propellers are configured to generate an overall thrust ranging between 10N to 300N for transporting different servicing equipment and/or to suit different weather conditions. When heavier equipment is required to be transported, more powerful propellers may be employed to produce thrust forces in excess of 300N.

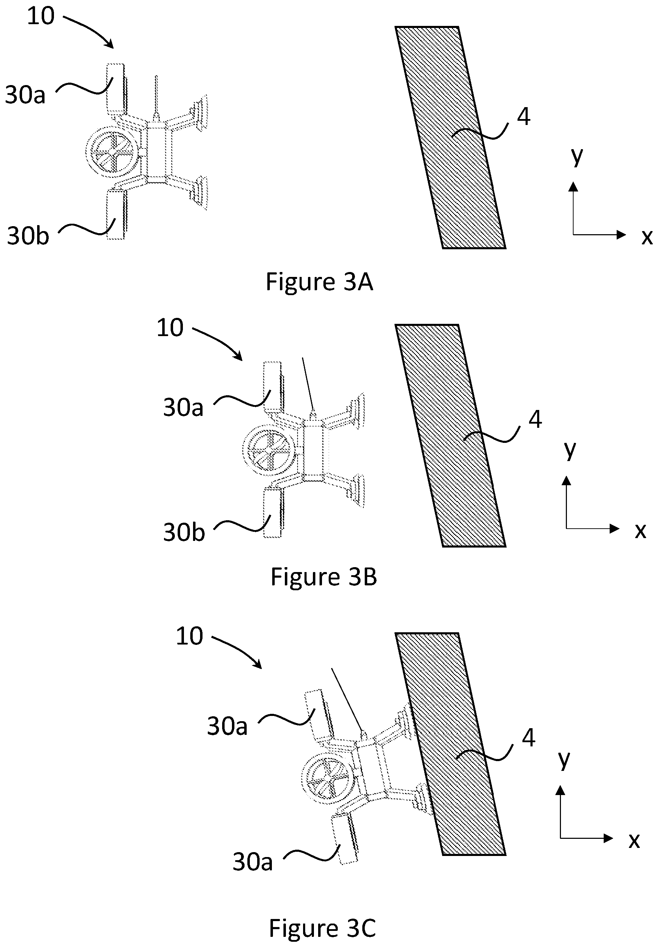

Figures 3A-C are side views illustrating different stages of the attachment process. Figure 3A shows the mobile deployment unit 10 has been lifted to the desired height and approximately levels with the work site at the wind turbine blade 4, before activating the propellers. Figure 3B shows the mobile deployment unit 10 being horizontally driven towards the wind turbine blade 4, with all the primary propellers generating substantially the same amount of thrust. Figure 3C shows the vacuum suction device 40 of the mobile deployment unit 10 makes contact with the inclined surface of the wind turbine blade 4 to form the attachment.

Specifically, all of the vacuum suction devices 40 must firmly engage with the angled surface prior to their activation in order to ensure a secured attachment. To achieve this, the primary propellers may rotate the main body 12 about a horizontal axis so that all of the vacuum suction devices 40 are in alignment with the inclined surface of the wind turbine blade 4. For example, the lower pair 30b of the primary propellers may generate a larger amount of thrust than the corresponding upper pair 30a to tilt the main body 12.

Referring back to Figures 2C and 2D, the set of secondary propellers 32 comprises two axially aligned secondary propellers 32 provided in the same horizontal plane, and level with the centre of the main body 12. The two secondary propellers 32 are orientated, and arranged to generate thrust, in the same direction. That is, when the mobile deployment unit 10 is suspended by the cable, the two secondary propellers 32 are each configured to generate a thrust in the horizontal direction perpendicular to that generated by the primary propellers 30, so as to drive translational movement along the said horizontal direction. That is, the secondary propellers drive the main body 12 sideways relative to, and not towards, the wind turbine blade 4.

The plurality of vacuum suction devices 40 comprises four vacuum suction devices 40 mounted on the side of the main body 12 opposite to the propellers 30, 32. Each of the vacuum suction devices 40 is controllable by the controller such that they activate to attach onto the surface of the wind turbine blade 4 and deactivate to detach from the wind turbine blade 4 as required.

### Second Embodiment

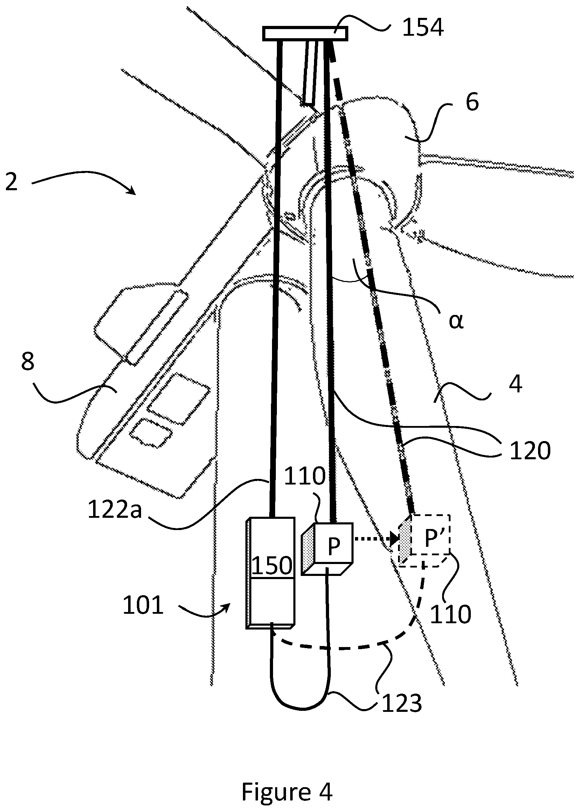

Figure 4 illustrates the deployment of a robotic deployment system according to a second embodiment of the present invention.

The robotic deployment system 101 is structurally and functionally similar to the robotic deployment system 1 of the first embodiment, in that it comprises a support unit 150 supporting the operation of the mobile deployment unit 110 through an auxiliary cable 123. The mobile deployment unit 110 is identical to the mobile deployment unit 10 of the first embodiment. For conciseness, like features are not described again.

In contrast, the support unit 150 and the mobile deployment unit 110 are suspended by respective first cable 122a and second cable 120. The first and second cables 122a, 120 are reeled from respective first and second cable winches (not shown) and fed through a connecting arm 154 (i.e. the second cable anchoring point) fixedly attached to the nacelle 8, which sets the first and second cables 122a, 120 apart to avoid entanglement. Thus, in the second embodiment, the connecting arm 154 is immobile, and that the elevations of the mobile deployment unit 110 and the support unit 150 are controlled by separate cable winches. In some other embodiments, the first and second cables may be connected to the nacelle by respective first and second cable winches, without the use of a connecting arm.

In the illustrated embodiment, the first and second cable winches are synchronistically controlled, thus the support unit 150 and the mobile deployment unit 110 elevate and descend in unison and their relative displacement remains constant during operation. Alternatively or in addition, the first and second cable winches may be independently controlled to suit operational needs. For example, the second cable winch may reel in or unreel to allow the mobile deployment unit 110 to cover various work sites at the wind turbine blade 4 whilst the support unit 150 remains stationary, or to adjust the tension in the second cable 120 once the mobile deployment unit has attached to the wind turbine blade 4 or docked onto the docking station.

Since the second cable 120 is connected to the nacelle 8, it is comparatively lengthier than that of the first embodiment. This results in a shallower angle α between the second cable 120 and the vertical axis when the mobile deployment unit 110 moves towards the wind turbine blade 4. Advantageously, such an arrangement increases the vertical force component provided by second cable 120 for suspending the mobile deployment unit 110, and thereby reduces the power consumption of the onboard propulsion units.

## Claims

1. A wind turbine robotic deployment system for servicing a wind turbine, comprising:
a mobile deployment unit (10) having one or more propulsion units mounted thereon arranged to generate thrust having at least a horizontal force component for driving movement in the mobile deployment unit towards a wind turbine blade of the wind turbine; and
a support unit (50) connected to the mobile deployment unit by an auxiliary cable (23); the support unit comprises auxiliary equipment and/or repair materials for supporting the operation of the mobile deployment unit through the auxiliary cable;
wherein the support unit is suspended in the air by a first cable (22a) connected to a nacelle of the wind turbine, and wherein during operation the mobile deployment unit is at least partially suspended in the air by a second cable (20);
and wherein the second cable is connected between the mobile deployment unit and a second cable anchoring point above the support unit.

2. The wind turbine robotic deployment system of claim 1, wherein the support unit and the mobile deployment unit are connected to
i) the nacelle by respective first and second cables; or
ii) a connecting arm respectively by a third cable and the second cable, wherein the connecting arm is suspended by the first cable connecting between the connecting arm and the nacelle.

3. The wind turbine robotic deployment system of claim 1 or claim 2, further comprises the first cable, and optionally the first cable extends substantially parallel to a tower of the wind turbine, and optionally the first cable comprises an electrical cable for supplying power to the support unit.

4. The wind turbine robotic deployment system of claim 3, further comprises a first cable winch at the nacelle, wherein the first cable is arranged to reel and/or unreel by the first cable winch for controlling the elevation of the support unit.

5. The wind turbine robotic deployment system of claim 3 or claim 4, wherein the wind turbine robotic system further comprises a stabiliser cable attached between the support unit and an anchor positioned below the support unit for stabilising the support unit.

6. The wind turbine robotic deployment system of any one of the preceding claims, further comprises a docking station to which the mobile deployment unit docks when it is inactive, and optionally the docking station is provided on the support unit and/or provided on one or more of the cables connected to the support unit.

7. The wind turbine robotic deployment system of any one of the preceding claims, comprises a plurality of mobile deployment units, wherein the mobile deployment units are connected to the support unit by respective auxiliary cables and independently operable.

8. The wind turbine robotic deployment system of any one of the preceding claims, wherein the mobile deployment unit further comprises one or more of:
a sensor arrangement for sensing the position and/or orientation of the mobile deployment unit and based thereon generating a sensor signal, wherein the sensor arrangement comprises one or more of an accelerometer, a gyroscope, a rangefinder, a GPS sensor and a displacement sensor;
a controller for controlling the one or more propulsion units based on the sensor signal, optionally the controller is configured to control the propulsion units by a closed-loop control; and
one or more attachment devices for removably attaching the mobile deployment unit onto a surface of the wind turbine blade, wherein the one or more attachment devices comprises vacuum suction devices and/or electromagnets.

9. The wind turbine robotic deployment system of any one of the preceding claims, wherein the one or more propulsion units of the mobile deployment unit are configured to generate thrust along multiple horizontal axes for effecting translational movement in the main body in the horizontal direction and/or rotational movement around any axis, and optionally the one or more propulsion units comprise a set of primary propulsion units each configured to generate thrust along a first horizontal axis, and a set of secondary propulsion units each configured to generate thrust along a second horizontal axis perpendicular to the first horizontal axis, and optionally,
the one or more propulsion units are configured to generate thrust along multiple axes, for effecting translational movement in the main body in any direction and/or rotational movement around any axis, and optionally,
the one or more propulsion units is rotatably supported on the mobile deployment unit for changing the direction of the generated thrust.

10. The wind turbine robotic deployment system of any one of the preceding claims, wherein the auxiliary cable supports the operation of the mobile deployment unit by supplying one or more of a power supply, pneumatic supply, vacuum supply and optical and/or data communication with the auxiliary equipment or a terminal.

11. The wind turbine robotic deployment system of any one of the preceding claims, further comprises an auxiliary winch or a recoil spring winder for adjusting at least the length of the auxiliary cable.

12. The wind turbine robotic deployment system of any one of the preceding claims, wherein the mobile deployment unit is configured to collect payload from the support unit for servicing the wind turbine blade, and to return the said payload onto the support unit upon completion of the servicing.

13. The wind turbine robotic deployment system of any one of the preceding claims, wherein the support unit is configured to lift personnel carried therein.

14. A method for deploying the wind turbine robotic deployment system of any one of the claims 1 to 13, comprising the step of:
moving, by the first cable, the support unit to an elevation proximal to a work site at the wind turbine blade, thereby suspending the support unit in the air;
moving, by the second cable, the mobile deployment unit to an elevation proximal to a servicing site at the wind turbine blade, thereby suspending the mobile deployment unit in the air ; and
controlling, the one or more propulsion units of the mobile deployment unit to drive movement in the mobile deployment unit towards the wind turbine blade.

15. The method for deploying the wind turbine robotic deployment of claim 14, wherein the said controlling further comprises:
undocking the mobile deployment unit from a docking station before operation; and/or
docking the mobile deployment unit onto the docking station once the operation is completed.

## Patentansprüche

1. Robotisches Einsatzsystem für Windturbinen zur Wartung einer Windturbine, umfassend:
eine mobile Einsatzeinheit (10)
mit einer oder mehreren darauf montierten Antriebseinheiten, die dazu angeordnet sind, Schub mit mindestens einer horizontalen Kraftkomponente zum Antreiben einer Bewegung in der mobilen Einsatzeinheit in Richtung eines Windturbinenblatts der Windturbine zu erzeugen; und
eine Unterstützungseinheit (50), die durch ein Hilfsseil (23) mit der mobilen Einsatzeinheit verbunden ist; wobei die Unterstützungseinheit Hilfsausrüstung und/oder Reparaturmaterialien zum Unterstützen des Betriebs der mobilen Einsatzeinheit durch das Hilfsseil umfasst;
wobei die Unterstützungseinheit durch ein erstes Seil (22a), das mit einer Gondel der Windturbine verbunden ist, in der Luft schwebt, und wobei die mobile Einsatzeinheit während des Betriebs zumindest teilweise durch ein zweites Seil (20) in der Luft schwebt;
und wobei das zweite Seil zwischen der mobilen Einsatzeinheit und einem zweiten Seilverankerungspunkt über der Unterstützungseinheit verbunden ist.

2. Robotisches Einsatzsystem für Windturbinen nach Anspruch 1, wobei die Unterstützungseinheit und die mobile Einsatzeinheit verbunden sind mit
i) der Gondel durch entsprechende erste und zweite Seile; oder
ii) einem Verbindungsarm jeweils durch ein drittes Seil und das zweite Seil, wobei der Verbindungsarm durch das erste Seil, das zwischen dem Verbindungsarm und der Gondel verbindet, aufgehängt ist.

3. Robotisches Einsatzsystem für Windturbinen nach Anspruch 1 oder Anspruch 2, das ferner das erste Seil umfasst, und optional erstreckt sich das erste Seil im Wesentlichen parallel zu einem Turm der Windturbine, und optional umfasst das erste Seil ein elektrisches Kabel zum Zuführen von Strom an die Unterstützungseinheit.

4. Robotisches Einsatzsystem für Windturbinen nach Anspruch 3, das ferner eine erste Seilwinde an der Gondel umfasst, wobei das erste Seil zum Aufwickeln und/oder Abwickeln durch die erste Seilwinde zum Steuern der Höhenlage der Unterstützungseinheit angeordnet ist.

5. Robotisches Einsatzsystem für Windturbinen nach Anspruch 3 oder Anspruch 4, wobei das robotische System für Windturbinen ferner ein Stabilisierungsseil umfasst, das zwischen der Unterstützungseinheit und einem Anker angebracht ist, der unter der Unterstützungseinheit positioniert ist, um die Unterstützungseinheit zu stabilisieren.

6. Robotisches Einsatzsystem für Windturbinen nach einem der vorhergehenden Ansprüche, das ferner eine Andockstation umfasst, an die die mobile Einsatzeinheit andockt, wenn sie inaktiv ist, und wobei optional die Andockstation an der Unterstützungseinheit bereitgestellt und/oder an einem oder mehreren der Seile bereitgestellt ist, die mit der Unterstützungseinheit verbunden sind.

7. Robotisches Einsatzsystem für Windturbinen nach einem der vorhergehenden Ansprüche, das eine Vielzahl von mobilen Einsatzeinheiten umfasst, wobei die mobilen Einsatzeinheiten durch jeweilige Hilfsseile mit der Unterstützungseinheit verbunden und unabhängig betreibbar sind.

8. Robotisches Einsatzsystem für Windturbinen nach einem der vorhergehenden Ansprüche, wobei die mobile Einsatzeinheit ferner eines oder mehrere umfasst von:
einer Sensoranordnung zum Erfassen der Position und/oder Ausrichtung der mobilen Einsatzeinheit und basierend darauf Erzeugen eines Sensorsignals, wobei die Sensoranordnung einen oder mehrere von einem Beschleunigungsmesser, einem Gyroskop, einem Entfernungsmesser, einem GPS-Sensor und einem Verschiebungssensor umfasst;
ein Steuergerät zum Steuern der einen oder der mehreren Antriebseinheiten basierend auf dem Sensorsignal, wobei optional das Steuergerät dazu konfiguriert ist, die Antriebseinheiten durch eine Regelung mit geschlossenem Regelkreis zu steuern; und
eine oder mehrere Anbringungsvorrichtungen zum abnehmbaren Anbringen der mobilen Einsatzeinheit an einer Oberfläche des Windturbinenblatts, wobei die eine oder mehreren Anbringungsvorrichtungen Vakuumsaugvorrichtungen und/oder Elektromagnete umfassen.

9. Robotisches Einsatzsystem für Windturbinen nach einem der vorhergehenden Ansprüche, wobei die eine oder mehreren Antriebseinheiten der mobilen Einsatzeinheit dazu konfiguriert sind, Schub entlang mehrerer horizontaler Achsen zu erzeugen, um eine Translationsbewegung in dem Hauptkörper in der horizontalen Richtung und/oder eine Rotationsbewegung um eine beliebige Achse zu bewirken, und wobei optional die eine oder die mehreren Antriebseinheiten einen Satz von primären Antriebseinheiten, die jeweils dazu konfiguriert sind, Schub entlang einer ersten horizontalen Achse zu erzeugen, und einen Satz von sekundären Antriebseinheiten, die jeweils dazu konfiguriert sind, Schub entlang einer zweiten horizontalen Achse senkrecht zu der ersten horizontalen Achse zu erzeugen, umfassen und wobei optional
die eine oder mehreren Antriebseinheiten dazu konfiguriert sind, Schub entlang mehrerer Achsen zu erzeugen, um eine Translationsbewegung in dem Hauptkörper in einer beliebigen Richtung und/oder eine Rotationsbewegung um eine beliebige Achse zu bewirken, und optional
wobei die eine oder die mehreren Antriebseinheiten drehbar an der mobilen Einsatzeinheit unterstützt sind, um die Richtung des erzeugten Schubes zu ändern.

10. Robotisches Einsatzsystem für Windturbinen nach einem der vorhergehenden Ansprüche, wobei das Hilfsseil den Betrieb der mobilen Einsatzeinheit unterstützt, indem es eines oder mehrere von einer Stromversorgung, pneumatischen Versorgung, Vakuumversorgung und optischen und/oder Datenkommunikation mit der Hilfsausrüstung oder einem Endgerät bereitstellt.

11. Robotisches Einsatzsystem für Windturbinen nach einem der vorhergehenden Ansprüche, das ferner eine Hilfswinde oder einen Rückstellfederwickler zum Einstellen mindestens der Länge des Hilfsseils umfasst.

12. Robotisches Einsatzsystem für Windturbinen nach einem der vorhergehenden Ansprüche, wobei die mobile Einsatzeinheit dazu konfiguriert ist, Nutzlast von der Unterstützungseinheit zum Warten des Windturbinenblatts aufzufangen und die Nutzlast nach Abschluss der Wartung auf die Unterstützungseinheit zurückzuführen.

13. Robotisches Einsatzsystem für Windturbinen nach einem der vorhergehenden Ansprüche, wobei die Unterstützungseinheit dazu konfiguriert ist, darin getragenes Personal zu heben.

14. Verfahren zum Einsatz des robotischen Einsatzsystems für Windturbinen nach einem der Ansprüche 1 bis 13, umfassend den Schritt des:
Bewegens der Unterstützungseinheit durch das erste Seil zu einer Höhenlage in der Nähe einer Arbeitsstelle am Windturbinenblatt, wodurch die Unterstützungseinheit in der Luft schwebt;
Bewegens der mobilen Einsatzeinheit durch das zweite Seil zu einer Höhenlage in der Nähe einer Wartungsstelle am Windturbinenblatt, wodurch die mobile Einsatzeinheit in der Luft schwebt; und
Steuerns der einen oder mehreren Antriebseinheiten der mobilen Einsatzeinheit, um eine Bewegung in der mobilen Einsatzeinheit in Richtung des Windturbinenblatts anzutreiben.

15. Verfahren zum Einsatz des robotischen Einsatzes für Windturbinen nach Anspruch 14, wobei das Steuern ferner Folgendes umfasst:
Lösen der mobilen Einsatzeinheit von einer Andockstation vor dem Betrieb; und/oder Andocken der mobilen Einsatzeinheit an die Andockstation, sobald der Betrieb abgeschlossen ist.

## Revendications

1. Système de déploiement robotique d'éolienne pour l'entretien d'une éolienne, comprenant :
une unité de déploiement mobile (10)
comportant une ou plusieurs unités de propulsion montées sur celle-ci agencées pour générer une poussée comportant au moins une composante de force horizontale pour entraîner le mouvement dans l'unité de déploiement mobile vers une pale d'éolienne de l'éolienne ; et
une unité de support (50) reliée à l'unité de déploiement mobile par un câble auxiliaire (23) ; l'unité de support
comprend un équipement auxiliaire et/ou des matériaux de réparation pour supporter le fonctionnement de l'unité de déploiement mobile à travers le câble auxiliaire ;
ladite unité de support étant suspendue dans les airs par un premier câble (22a) relié à une nacelle de l'éolienne, et durant le fonctionnement, ladite unité de déploiement mobile étant au moins partiellement suspendue dans les airs par un deuxième câble (20) ;
et ledit deuxième câble étant relié entre l'unité de déploiement mobile et un second point d'ancrage de câble au-dessus de l'unité de support.

2. Système de déploiement robotique d'éolienne selon la revendication 1, ladite unité de support et ladite unité de déploiement mobile étant reliées à
i) la nacelle par des premier et deuxième câbles respectifs ; ou
ii) un bras de liaison respectivement par un troisième câble et le deuxième câble, ledit bras de liaison étant suspendu par le premier câble qui est relié entre le bras de liaison et la nacelle.

3. Système de déploiement robotique d'éolienne selon la revendication 1 ou la revendication 2, comprenant en outre le premier câble, et éventuellement le premier câble s'étend sensiblement parallèle à une tour de l'éolienne, et éventuellement le premier câble comprend un câble électrique pour fournir de l'énergie à l'unité de support.

4. Système de déploiement robotique d'éolienne selon la revendication 3, comprenant en outre un premier treuil à câble au niveau de la nacelle, le premier câble étant agencé pour être enroulé et/ou déroulé par le premier treuil à câble pour commander l'élévation de l'unité de support.

5. Système de déploiement robotique d'éolienne selon la revendication 3 ou la revendication 4, ledit système robotique d'éolienne comprenant en outre un câble stabilisateur fixé entre l'unité de support et une ancre positionnée en dessous de l'unité de support pour stabiliser l'unité de support.

6. Système de déploiement robotique d'éolienne selon l'une quelconque des revendications précédentes, comprenant en outre une station d'accueil à laquelle l'unité de déploiement mobile s'arrime lorsqu'elle est inactive, et éventuellement ladite station d'accueil étant disposée sur l'unité de support et/ou disposée sur un ou plusieurs des câbles reliés à l'unité de support.

7. Système de déploiement robotique d'éolienne selon l'une quelconque des revendications précédentes, comprenant une pluralité d'unités de déploiement mobiles, lesdites unités de déploiement mobiles étant reliées à l'unité de support par des câbles auxiliaires respectifs et pouvant fonctionner indépendamment.

8. Système de déploiement robotique d'éolienne selon l'une quelconque des revendications précédentes, ladite unité de déploiement mobile comprenant en outre un ou plusieurs parmi :
un agencement de capteur destiné à la détection de la position et/ou de l'orientation de l'unité de déploiement mobile et, sur la base de celle-ci, la génération d'un signal de capteur, ledit agencement de capteur comprenant l'un ou plusieurs d'un accéléromètre, d'un gyroscope, d'un distancemètre, d'un capteur GPS et d'un capteur de déplacement ;
un dispositif de commande destiné à commander la ou les unités de propulsion sur la base du signal de capteur, éventuellement ledit dispositif de commande étant conçu pour commander les unités de propulsion par une commande en boucle fermée ; et
un ou plusieurs dispositifs de fixation pour fixer de manière amovible l'unité de déploiement mobile sur une surface de la pale d'éolienne, ledit ou lesdits dispositifs de fixation comprenant des dispositifs d'aspiration par vide et/ou des électroaimants.

9. Système de déploiement robotique d'éolienne selon l'une quelconque des revendications précédentes, ladite ou lesdites unités de propulsion de l'unité de déploiement mobile étant conçues pour générer une poussée le long de multiples axes horizontaux pour effectuer un mouvement de translation dans le corps principal dans la direction horizontale et/ou un mouvement de rotation autour de n'importe quel axe, et éventuellement ladite ou lesdites unités de propulsion comprenant un ensemble d'unités de propulsion primaires chacune conçue pour générer une poussée le long d'un premier axe horizontal, et un ensemble d'unités de propulsion secondaires chacune conçue pour générer une poussée le long d'un second axe horizontal perpendiculaire au premier axe horizontal, et éventuellement,
ladite ou lesdites unités de propulsion étant conçues pour générer une poussée le long de plusieurs axes, pour effectuer un mouvement de translation dans le corps principal dans n'importe quelle direction et/ou un mouvement de rotation autour de n'importe quel axe, et éventuellement,
ladite ou lesdites unités de propulsion étant supportées de manière rotative sur l'unité de déploiement mobile pour changer la direction de la poussée générée.

10. Système de déploiement robotique d'éolienne selon l'une quelconque des revendications précédentes, ledit câble auxiliaire supportant le fonctionnement de l'unité de déploiement mobile en fournissant l'un ou plusieurs d'une alimentation électrique, d'une alimentation pneumatique, d'une alimentation en vide et d'une communication optique et/ou de données avec l'équipement auxiliaire ou un terminal.

11. Système de déploiement robotique d'éolienne selon l'une quelconque des revendications précédentes, comprenant en outre un treuil auxiliaire ou un bobineur à ressort récupérateur pour régler au moins la longueur du câble auxiliaire.

12. Système de déploiement robotique d'éolienne selon l'une quelconque des revendications précédentes, ladite unité de déploiement mobile étant conçue pour collecter la charge utile de l'unité de support pour l'entretien de la pale d'éolienne, et pour renvoyer ladite charge utile sur l'unité de support à la fin de l'entretien.

13. Système de déploiement robotique d'éolienne selon l'une quelconque des revendications précédentes, ladite unité de support étant conçue pour soulever le personnel qui est transporté dans celle-ci.

14. Procédé permettant le déploiement du système de déploiement robotique d'éolienne selon l'une quelconque des revendications 1 à 13, comprenant l'étape de :
déplacement, par le premier câble, de l'unité de support jusqu'à une élévation à proximité d'un site de travail au niveau de la pale d'éolienne, suspendant ainsi l'unité de support dans les airs ;
déplacement, par le second câble, de l'unité de déploiement mobile jusqu'à une élévation à proximité d'un site d'entretien au niveau de la pale d'éolienne, suspendant ainsi l'unité de déploiement mobile dans les airs ; et
la commande de ladite ou desdites unités de propulsion de l'unité de déploiement mobile pour entraîner le déplacement de l'unité de déploiement mobile vers la pale d'éolienne.

15. Procédé permettant le déploiement du déploiement robotique d'éolienne selon la revendication 14, ladite commande comprenant en outre :
le désarrimage de l'unité de déploiement mobile d'une station d'accueil avant l'opération ; et/ou l'arrimage de l'unité de déploiement mobile sur la station d'accueil une fois l'opération terminée.
